(19) Europäisches Patentamt
European Patent Office
Office européen des brevets

(11) **EP 3 020 033 B1**

(12) **EUROPÄISCHE PATENTSCHRIFT**

(45) Veröffentlichungstag und Bekanntmachung des Hinweises auf die Patenterteilung:
**10.01.2018** **Patentblatt 2018/02**

(51) Int Cl.:
**G09B 23/28** *(2006.01)* **G09B 23/30** *(2006.01)*
**G09B 23/34** *(2006.01)*

(21) Anmeldenummer: **14818885.7**

(22) Anmeldetag: **18.11.2014**

(86) Internationale Anmeldenummer:
**PCT/EP2014/074934**

(87) Internationale Veröffentlichungsnummer:
**WO 2015/075038 (28.05.2015 Gazette 2015/21)**

(54) **MODULARES CHIRURGISCHES TRAININGSSYSTEM**

MODULAR SURGICAL TRAINING SYSTEM

SYSTÈME MODULAIRE D'ENTRAÎNEMENT À LA CHIRURGIE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.11.2013 DE 102013112746**
**19.11.2013 DE 102013112745**

(43) Veröffentlichungstag der Anmeldung:
**18.05.2016 Patentblatt 2016/20**

(73) Patentinhaber: **Forschungs und Transferzentrum Leipzig E.V.**
**an der Hochschule für Technik, Wirtschaft und Kultur Leipzig**
**04107 Leipzig (DE)**

(72) Erfinder:
• **ANDRACK, Ben**
**04177 Leipzig (DE)**
• **MÜLLER, Matthias**
**04821 Polenz (DE)**
• **HANDWERK, Jochen**
**97292 Holzkirchen (DE)**
• **LORBER, Ingo**
**04229 Leipzig (DE)**
• **KÖHLER, Christian**
**70376 Stuttgart (DE)**
• **KORB, Werner**
**04288 Leipzig (DE)**

• **BERNAL VERA, Luis Enrique**
**04107 Leipzig (DE)**
• **PILIC, Tobias**
**04451 Borsdorf (DE)**

(74) Vertreter: **Lippert Stachow Patentanwälte Rechtsanwälte Partnerschaft mbB**
**Krenkelstrasse 3**
**01309 Dresden (DE)**

(56) Entgegenhaltungen:
WO-A1-94/06109    WO-A1-94/09847
WO-A1-96/42076    WO-A1-2009/067778
WO-A2-02/41285    DE-U1-202008 009 567
US-A- 3 640 277    US-A1- 2009 246 747

• **TOBIAS PILIC ET AL: "Ultrasound Sensory for Monitoring Mechanical Stress on Risk Structures in Surgical Training Systems", BIOMEDICAL ENGINEERING / BIOMEDIZINISCHE TECHNIK, 7. September 2013 (2013-09-07), XP055173172, ISSN: 0013-5585, DOI: 10.1515/bmt-2013-4427**
• **G. BAUSCH ET AL: "Design and development process of a next-generation training system for spinal surgery", SIMULATION, Bd. 89, Nr. 12, 29. Oktober 2013 (2013-10-29), Seiten 1436-1441, XP055173235, ISSN: 0037-5497, DOI: 10.1177/0037549713496151**

**Beschreibung**

Die Erfindung betrifft ein modulares chirurgisches Trainingssystem zum Trainieren chirurgischer Eingriffe mit realen chirurgischen Instrumenten, die Merkmale von Anspruch 1 umfassend. Chirurgische Eingriffe befassen sich mit der Behandlung, d.h. der Therapie, von Krankheiten und Verletzungen durch direkte, manuelle oder instrumentale Einwirkung auf den Körper des Patienten, wobei diese chirurgischen Eingriffe hinlänglich als Operation oder kurz OPs bezeichnet werden. Operationen sind sowohl aus der Humanmedizin als auch aus der Veterinärmedizin bekannt.

Zum praktischen Erlernen, wiederholendem Üben und zur Perfektionierung chirurgischer Techniken sind unterschiedlichste Trainingssysteme bekannt, die sich hinsichtlich ihres Anspruchs an eine realitätsnahe Nachbildung der wirklichen Operationsumgebung stark unterscheiden. Neben rein computerbasierten virtuellen Trainingssystemen, wie sie beispielsweise von der Firma Industrial Virtual Reality Inc. angeboten werden, sind andere Trainingssysteme bekannt, bei denen der chirurgische Eingriff an einer mehr oder weniger detailgetreuen Nachbildung einer anatomischen Struktur trainiert wird.

Diese nachgebildeten anatomischen Strukturen sind meist Kunststoffmodelle, die in ihrer Komplexität und realitätsnahen Nachbildung stark unterschiedlich ausgeprägt sein können. Sie enthalten neben festen Knochenstrukturen hauptsächlich elastische Materialien zur Darstellung von menschlichem Gewebe. So ist beispielsweise aus der WO 94/06109 A1 ein Trainingsgerät für die Hohlraumendoskopie bekannt, welches ein Trainingsmodul aufweist, in dem ein Hohlraum enthalten ist und das abdichtbar gestaltet ist. Somit wird es möglich, mit einem Endoskop in den Hohlraum einzudringen, um darin die endoskopischen Funktionen zu trainieren. Im Fokus einer möglichst realitätsnahen Nachbildung stehen vor allem die haptischen Eigenschaften der anatomischen Struktur, insbesondere der unterschiedlichen Gewebearten wie beispielsweise Knochen, Gefäße oder Nerven, während der Interaktion mit den vom trainierenden Operateur gehaltenen chirurgischen Instrumenten. Während des Trainings wird die verwendete anatomische Struktur durch mechanische Bearbeitung wie beispielsweise Schneiden, Fräsen o.ä. verbraucht, so dass sie vor dem nächsten Training ersetzt werden muss.

Diese nachgebildeten anatomischen Strukturen können ihrerseits ergänzt sein mit Systemen zur Nachbildung von Körperfunktionen, wie beispielsweise einem simulierten Herzkreislaufsystem mit Puls, Blutdruck oder aber auch anderen Körperflüssigkeiten. Dies ist u.a. auch in G. Bausch et al., "Design and development process of a next-generation training system for spinal surgery", Simulation, bd. 89, Nr. 12, 29. Oktober 2013, S. 1436-1441, XP055173235, ISSN: 0037-54, DOI: 10.1177/0037549713496151, beschrieben. Die Nachbildung dieser Körperfunktionen erhöht den Detailgrad der haptischen Nachbildung für den Trainierenden, beispielsweise durch die Simulation des Drucks der Gehirn-Rückenmarks-Flüssigkeit.

Weiterhin ist bekannt, dass Blutungen beispielsweise über gefüllte und zum Platzen gebrachte Kapseln oder über Vorrichtungen zum Erzeugen großer Blutmengen, wie sie beispielsweise durch abgetrennte Gliedmaßen oder arterielle Verletzungen entstehen, nachgebildet werden.

Ein Trainingssystem, in dem eine anatomische Struktur nachgebildet wird, ist als naheliegende Lösung in der WO 96742076 A1 beschrieben. Dieses Trainingssystem umfasst eine Basis, mit der ein anatomische Strukturen nachbildendes Trainingsmodul lösbar verbunden wird. Mit der Basis ist ebenfalls eine Pumpe verbunden, mittels derer der Blutfluss in der anatomische Struktur simuliert werden kann. Hierzu wird ein Verbrauchsmedium in Form eines simulierten Blutes über Schläuche in die anatomische Struktur unter Druck hineingepumpt. Es kann auch ein Abführung des Verbrauchsmediums aus der anatomischen Struktur realisiert sein. Die Fördermittel, hier die Pumpe und die Schläuche, sind lösbar mit der anatomischen Struktur verbunden, um diese gegebenenfalls auswechseln zu können.

Wie beispielsweise aus der WO 02/41285 A2 ist es ferner bekannt, Körperflüssigkeiten durch Medien, wie beispielsweise Theaterblut, nachzubilden, um Farbe, Konsistenz und äußerer Erscheinung echten Blutes so nahe wie möglich zu kommen. Zur Erzeugung eines Flusses oder Druckanstiegs der entsprechenden Körperflüssigkeiten werden Pumpen, vorwiegend Peristaltikpumpen, und/oder Ventile sowie entsprechende Leitungen verwendet. Die verwendeten Peristaltikpumpen, auch Schlauchpumpen genannt, weisen dabei vor allem prinzipbedingte Totzeiten der Förderung auf. Die zum Training verwendeten Medien müssen vor dem nächsten Training wieder aufgefüllt oder ersetzt werden. Dies birgt eine Reihe unterschiedlicher Nachteile. So ist beim Nachfüllen der Medien stets auf eine ausreichende Entlüftung des Fördersystems zu achten, außerdem kann es nach mehrmaliger Benutzung eines Vorratsbehälters für diese Medien zu Ablagerungen und Verkrustungen kommen die dann wiederum zu Verklebungen und/oder Verstopfungen führen. Mithin entstehen hierdurch zeit- und kostenaufwendige Reinigungsarbeiten.

Bei einer realen OP kommt es im Allgemeinfall zu einer Belastung empfindlicher Gewebe, den Risikostrukturen, welche beim menschlichen Patienten postoperative Komplikationen hervorrufen können. Typische, bei OPs entstehende, Belastungsarten an Risikostrukturen wie Nerven und Gefäßen sind Kompressionen (Quetschung, Druckbelastung) und Traktionen (Dehnung, Zugbelastung). Zur quantitativen Beurteilung des zu trainierenden chirurgischen Eingriffs ist deshalb bekannt, Sensoren, insbesondere Drucksensoren und Dehnmessstreifen, einzusetzen. Da sich die verwendeten Sensoren direkt auf der anatomischen Struktur befinden, müssen auch diese vor jedem neuen Training zusammen mit der anatomischen Struktur ausgetauscht werden, wodurch wiederum Mehrkosten entstehen. Die Veröffentlichung Tobias Pilic et al., "Ultrasonic Sensory for Monitoring Mechanical Structures in Surgical Training Systems", Biomedical Engineering / Biometrische Technik, 7. September 2013, XP055173172, ISSN: 0013-5585,DOI: 10.1515/bmt-2013-4427 offenbart hierzu eine Lösung, mit der während einer Trainings-OP auftretende Belastungen an Risikostrukturen ermittelt werden können. Hierzu wird der Struktur eine Erregung aufgeprägt und anhand der Reflektion der Erregung über eine Computerauswertung auf die Lage und die Art der Belastung geschlossen. Dadurch wird es beispielsweise möglich, den Trainierenden rechtzeitig zu warnen, bevor eine Zerstörung der Risikostruktur in der anatomischen Struktur auftritt.

Es sind chirurgische Trainingssysteme bekannt, die einzelne der beschriebenen Aspekte, wie die Nachbildung einer anatomischen Struktur, die Nachbildung diverser Körperflüssigkeiten oder die Verwendung von Sensorik kombinieren.

So offenbart US 2009/0246747 A1 ein Trainingssystem welches, das Innere eines menschlichen oder tierischen Körpers mit allen wichtigen Organen nachbildet. Das Trainingssystem umfasst u.a. die Nachbildung des Herzkreislaufsystems, wobei das Herz durch eine Peristaltikpumpe nachgebildet wird. Die großen Gefäße, wie die Aorta sind durch Schläuche nachgebildet, wobei der Innendruck der Schläuche mittels Drucksensoren oder der Volumenstrom des, das Blut nachbildenden, Mediums mittels Durchflussmessern messbar sind. Nachgebildete Organe können Kanäle zur Nachbildung der Gefäße des Organs aufweisen. So wird in einer Ausgestaltung eine Gefäßruptur einer Niere nachgebildet, wobei das von der Peristaltikpumpe geförderte Medium in großen Mengen aus dem Gefäß austritt. Sind einzelne Organe durch das Training in ihrer Struktur verändert worden, beispielsweise durch den Einsatz eines Skalpells, wird das gesamt Organ ausgetauscht.

Dieses Trainingssystem weist eine Reihe von Nachteilen auf. Nach Durchführung eines Trainings, beispielsweise einer Operation an der Niere, können große Teile des Trainingssystems durch ausgetretenes Theaterblut verschmutzt sein, wodurch diese Teile einer gründlichen zeitaufwendigen Reinigung unterzogen werden müssen. Zudem müssen die Vorratsbehälter der verbrauchten Medien wieder aufgefüllt werden. Die verbrauchten anatomischen Strukturen, ggf. auch mit den entsprechenden Sensoren, müssen ersetzt und erneut mit den anderen Organen oder Gefäßen verbunden werden. Insgesamt bedeutet dies einen sehr hohen zeitlichen und personellen, letztendlich aber finanziellen Aufwand. Das Trainingssystem steht zudem in dieser Zeit nicht zur Verfügung.

Weiterhin ist aus WO 2009/067778 A1 ein modulares Trainingssystem zum Training von Operationen am und/oder im menschlichen Schädel bekannt. Mit dem Trainingssystem sind beispielsweise Operationen zum Verlegen einer externen Drainage vorgesehen, um den Druck innerhalb eines mit Liquor gefüllten Ventrikels zu senken. Hierzu weißt das Trainingssystem ein Basismodul und ein Trainingsmodul auf. Das Trainingsmodul umfasst die nachgebildete anatomische Struktur in Form des Ventrikels, wobei der Ventrikel als Latexballon ausgebildet und mit Wasser gefüllt ist. Zum Erzeugen eines realitätsnahen Ventrikelinnendrucks, weist das Basismodul einen Druckerzeuger auf, der durch eine Flüssigkeitssäule gebildet ist. Der hydrostatische Druck der Flüssigkeitssäule wirkt auf einen zweiten Ballon der am Basismodul angeordnet ist. Sind Trainingsmodul und Basismodul miteinander verbunden, so ist der zweite Ballon mit dem Latexballon wirkverbunden. Über eine an der Flüssigkeitssäule angeordnete Skala, kann zudem der von dem Trainierenden auf den Ventrikel ausgeübte Druck quantitativ bestimmt werden.

Nachteilig an diesem System ist, dass auf die Nachbildung von Blutungen vollständig verzichtet wird. Zudem ist das Trainingssystem aufgrund der speziellen Ausgestaltung der Basisstation nur geeignet, um Operationen am und/oder im Schädel nachzubilden. Das Training an anderen anatomischen Strukturen ist nicht vorgesehen, wodurch der Einsatzbereich sehr beschränkt ist. Ferner muss der Druckerzeuger mit der darin befindlichen Flüssigkeit regelmäßig gewartet werden, da beispielsweise durch Verdunstung, Flüssigkeit entweichen kann, wodurch der hydrostatische Druck der Flüssigkeitssäule von einem zum nächsten Training schwanken kann. Hierdurch wird eine Neukalibrierung des Druckerzeugers notwendig, was wiederum mit einem Zeit- und Kostenaufwand verbunden ist.

In der DE 20 2008 009567 U1 ist eine Trainingsvorrichtung für endovaskuläre interventionelle Eingriffe beschrieben, bei der in einem Gehäuse eine transparente Nachbildung eines Gefäßverlaufs angeordnet ist. In dem Gehäuse ist weiterhin eine Beleuchtungseinrichtung und eine verfahrbare Kamera vorgesehen. Damit kann einerseits ein endovaskulärer Eingriff am lebenden Organismus trainiert werden, der üblicherweise mittels Kamera am Operationsgerät geführt wird. Durch die transparente Ausführung der Nachbildung und die Beleuchtung mit der Kamera ist es möglich, auch von außen den Operationsverlauf zu beobachten.

Eine Aufgabe der vorliegenden Erfindung besteht demnach darin, ein modulares chirurgisches Trainingssystem anzugeben, das die Nachteile des Standes der Technik meidet, von einem Anwender in kurzer Zeit, ohne geschultes Personal in Betrieb genommen und wieder einsatzbereit gemacht werden kann, ohne dass der Anwender hierbei mit Verbrauchsflüssigkeiten oder anderen Flüssigkeiten in Kontakt kommt, das wartungsarm ist, eine Kalibrierung seitens des Anwenders entfallen kann und das flexibel, d.h. zum Trainieren unterschiedlichster chirurgischer Eingriffe, ist.

Es wird daher ein modulares chirurgisches Trainingssystem der eingangs genannten Art vorgeschlagen, bei dem das Trainingsmodul und das Basismodul über eine Kombinationsschnittstelle lösbar miteinander verbunden sind. Über die Kombinationsschnittstelle sind pneumatische und, optional, mechanische und/oder elektrische Energie vom Basismodul zum Trainingsmodul und, optional, elektrische Signale zwischen Basismodul und Trainingsmodul übertragbar. Die Fördermittel des Basismoduls sind über die Kombinationsschnittstelle mit den Fördermitteln des Trainingsmoduls ebenfalls lösbar verbunden. Die Fördermittel in der Basisstation weisen zumindest einen pneumatische Energie in Form von Druckluft erzeugenden Luftverdichter auf. Dabei weisen die Fördermittel in dem Trainingsmodul zumindest ein Druckluft aufnehmendes Druckvolumen und das Trainingsmodul zumindest ein, vom Druckvolumen medienseitig getrenntes und ein Verbrauchsmedium aufnehmendes Verbrauchsmedienvolumen auf. Dabei wechselwirken Druckvolumen und Verbrauchsmedienvolumen so miteinander, dass zumindest ein Verbrauchsmedium in die anatomischen Strukturen förderbar ist oder ein Innendruck zumindest in einer anatomischen Struktur erzeugt wird.

Über die Kombinationsschnittstelle kann die erzeugte pneumatische Energie vom Basismodul an das Trainingsmodul übertragen werden.

Erfindungsgemäß wird durch die Verwendung von Druckluft als Energieträger eine medienseitige Trennung ermöglicht, d.h. dass das zumindest eine Verbrauchsmedium nur dem Trainingsmodul zugeordnet ist und nicht über die Kombinationsschnittstelle gefördert werden muss. Im Unterschied zur Verwendung von Peristaltikpumpen kann hierbei eine gleichmäßige Förderung des zumindest einen Verbrauchsmediums erzielt werden, d.h. ohne Totzeiten der Förderung, wie sie typisch ist für Peristaltikpumpen. Nachteilig ist weiterhin bei Peristaltikpumpen, dass diese volumstromgetrieben sind und damit im Gegensatz zu druckgetriebenen Pumpen der Förderdruck nicht definiert ist, was beispielsweise zu einem Druckanstieg bei Verstopfungen führen kann.

In aller Regel wird in der vorliegenden Beschreibung der Erfindung auf künstliche Simulationsmaterialen oder künstliche Anatomiestrukturen verwiesen, auch wenn sie nicht ausdrücklich als solche bezeichnet werden. Es ist jedoch auch möglich, echte anatomische Strukturen zu verwenden.

Ein wesentlicher Vorteil der vorliegenden Erfindung ist die modulare Gestaltung des Trainingssystems in ein Basismodul und ein Trainingsmodul. Materialien, die während eines Trainings verbraucht werden, sogenannten Verbrauchsmaterialien, wie beispielsweise anatomische Strukturen oder durch zumindest ein Verbrauchsmedium simulierte Körperflüssigkeiten, sind dem Trainingsmodul zugeordnet. Wiederverwendbare kostenintensive Komponenten, wie beispielsweise pneumatische, elektrische und/oder mechanische Aktoren, Elektronikbauteile oder auch ein Torso, beispielsweise zur realitätsnahen Einbettung der anatomischen Strukturen, sind dem Basismodul zugeordnet.

Basismodul und Trainingsmodul sind über eine Kombinationsschnittstelle lösbar, beispielsweise durch eine Verriegelung, miteinander verbunden. Mithin ist das erfindungsgemäße Trainingssystem sehr anwenderfreundlich und kostengünstig. Dies wird dadurch erreicht, dass die Basisstation, mit den oben beschriebenen kostenintensiven Komponenten, regelmäßig beim Verwender des Trainingssystems verbleiben kann, während das verbrauchte Trainingsmodul entfernt und u.U. wieder zum Hersteller zurückgeschickt werden kann, um es zu regenerieren, d.h. das zumindest eine Verbrauchsmedium wieder aufzufüllen und ggf. zu entlüften sowie um die anatomischen Strukturen nach der mechanischen Bearbeitung durch den trainierenden Operateur zu ersetzten. Demnach können eine Mehrzahl von unbenutzten Trainingsmodulen vorgehalten werden, die nach einem durchgeführten Training vom Verwender einfach und schnell über die Kombinationsschnittstelle mit der Basisstation verbunden werden, um das nächste Training durchzuführen. Eine Unterstützung von speziell geschultem Personal ist nicht notwendig, vielmehr kann der Verwender selbst das Trainingssystem in Betrieb nehmen. Mithin werden Rüstzeiten zur Vorbereitung des nächsten Trainings durch das modulare Konzept erfindungsgemäß stark verkürzt.

Zudem kann vorgesehen sein, dass Trainingsmodule jeweils unterschiedliche anatomische Strukturen aufnehmen können, so dass das Trainingssystem sehr flexibel eingesetzt werden kann und nicht auf einen einzigen anatomischen Bereich, wie beispielsweise den menschlichen Schädel, beschränkt ist.

Ein weiterer erfindungsgemäßer Vorteil ist, dass das zumindest eine Verbrauchsmedium nicht über die Kombinationsschnittstelle hinweg übertragen wird. Dadurch wird eine Verschmutzung des Trainingssystems vermieden, da das zumindest eine Verbrauchsmedium lediglich am oder im auszutauschenden Trainingsmodul verbleibt. Es sind keine verbrauchsmedienführende und zu trennende Schlauchverbindungen notwendig, die das Trainingssystem zusätzlich verschmutzen würden. Sodann können zeitaufwendige Reinigungsarbeiten entfallen.

Erfindungswesentlich ist zudem, dass Basismodul und Trainingsmodul über die Kombinationsschnittstelle lösbar verbundene Fördermittel aufweisen. Während aktive Komponenten der Fördermittel im wiederverwendbaren Basismodul angeordnet sind, sind die passiven Komponenten im Trainingsmodul angeordnet. So ist die von den aktiven Komponenten bereitgestellte Energie über die Kombinationsschnittstelle zu den passiven Komponenten übertragbar, wodurch das zumindest eine Verbrauchsmedium in die anatomischen Strukturen förderbar ist. Erfindungsgemäß können Verbrauchsmedien so gefördert werden, dass sie aus den anatomischen Strukturen austreten, beispielsweise als Blutung, oder dass sie den Innendruck einer anatomischen Struktur, beispielsweise den Gehirn-Rückenmarks-Flüssigkeits-Druck der Dura, genauer des Duralschlauches und den damit verbunden Nervenwurzeln nachbilden, ohne dabei auszutreten.

Durch die Fördermittel ist zumindest eine simulierte Körperflüssigkeit während des Trainings in den Situs dosierbar, beispielsweise in Form einer Blutung. Die Dosierung der Blutung in den Situs steigert den Realismus des Trainings um ein vielfaches, da erst hierdurch OPtypische Situationen entstehen. So bildet die Blutung eine permanente Sichtbehinderung. Diese muss der Trainierende ständig absaugen, um in der kurzen Zeit mit freier Sicht die eigentlichen OP-Schritte durchführen zu können. Dies erzeugt realistische Arbeitsabläufe, da es den Trainierenden unter Zeitdruck setzt und zudem eine Hand des Trainierenden an den Sauger bindet.

Zur Trennung der aktiven Komponenten des Basismoduls von den passiven Komponenten des Trainingsmoduls über die Kombinationsschnittstelle, ist der Luftverdichter vorgesehen. Der Luftverdichter selbst ist beispielswiese elektrisch angetrieben, wobei das Basismodul hierzu über eine externe Energiequelle mit elektrischer Energie versorgt wird.

In einer weiteren Ausgestaltung des erfindungsgemäßen Trainingssystems kann vorgesehen sein, dass vom Trainingsmodul zumindest zwei Verbrauchsmedien aufnehmbar sind, wobei das erste Verbrauchsmedium durch zumindest eine Austrittsstelle der anatomischen Strukturen durchleitbar ist und das mittels des zweiten Verbrauchsmediums der Innendruck zumindest eines Abschnitts der anatomischen Strukturen nachbildbar ist. Hierdurch ist der Realismus des Trainingssystems weiter steigerbar, indem beispielsweise das erste Verbrauchsmedium als Theaterblut und das zweite Verbrauchsmedium als ein die Gehirn-Rückenmarks-Flüssigkeit simulierendes Medium ausgebildet sind. Weitere Verbrauchsmedien zur Simulierung anderer Körperflüssigkeiten können erfindungsgemäß vorgesehen sein.

Weiterhin ist es zweckmäßig, dass das erste Verbrauchsmedium und das zweite Verbrauchsmedium jeweils ein separates Verbrauchsmedienvolumen bilden, welches jeweils mit einem korrespondierenden Druckvolumen wechselwirkt.

Erfindungsgemäß kann auch vorgesehen sein, dass das erste Verbrauchsmedium, welches beispielsweise durch Theaterblut gebildet wird, durch mehr als eine Austrittsstelle der anatomischen Strukturen durchleitbar ist. So können Austrittsstellen an einer Vielzahl unterschiedlicher Positionen an der anatomischen Struktur angeordnet werden, die jedoch von demselben Verbrauchsmedienvolumen gespeist werden können aber nicht müssen. Mithin können hierdurch unterschiedliche Blutungssituationen simuliert werden. Wesentlicher Vorteil der modularen Ausgestaltung ist hierbei wieder, dass der Verwender bei der Inbetriebnahme oder Regenerierung des Trainingssystems nicht jede Austrittsstelle separat an das Verbrauchsmedienvolumen anschließen muss. Vielmehr sind die anatomischen Strukturen, das zumindest eine Verbrauchsmedium und dessen Verbindung zu den anatomischen Strukturen bereits im Trainingsmodul vorkonfektioniert und muss nur noch mit der Basisstation verbunden werden. Hierdurch können auch Störungen, wie sie beispielsweise nach häufiger Benutzung durch Verschleiß auftreten verhindert werden. Druckverluste durch verschleißbedingte Leckagen können vermieden werden.

Zweckmäßig ist es außerdem, dass das Basismodul und das Trainingsmodul über die Kombinationsschnittstelle lösbar verbundene zumindest einen Volumenstrom steuerbare Steuermittel aufweisen. Hierbei ist es vorteilhaft, dass durch die Steuermittel zumindest ein Volumenstrom des zumindest einen Verbrauchsmediums steuerbar ist. Sind wie in einer anderen Ausgestaltung mehrere Austrittsstellen für ein Verbrauchsmedium an den anatomischen Strukturen vorgesehen, so kann wiederum vorgesehen sein, dass zumindest einer der Volumenströme zu den Austrittsstellen mit den Steuermitteln steuerbar ist. Sind mehrere Volumenströme steuerbar, kann der Realismus des Trainingssystems weiter gesteigert werden, da an unterschiedlichen Austrittsstellen unterschiedliche Mengen des zumindest einen Verbrauchsmediums austreten können. So ist es möglich leichte Blutungen bis hin zu starken arteriellen Blutungen zu simulieren und den Umgang hiermit zu trainieren.

Während aktive Komponenten der Steuermittel im wiederverwendbaren Basismodul angeordnet sind, sind die passiven Komponenten im Trainingsmodul angeordnet. So ist die von den aktiven Komponenten bereitgestellte Energie über die Kombinationsschnittstelle zu den passiven Komponenten übertragbar, wodurch der zumindest ein Volumenstrom steuerbar ist.

Zur Trennung der aktiven Komponenten des Basismoduls von den passiven Komponenten des Trainingsmoduls über die Kombinationsschnittstelle, kann in einer erfindungsgemäßen Ausgestaltung vorgesehen sein, dass die Steuermittel in der Basisstation zumindest einen Schlauchquetschventilaktor aufweisen. Der Schlauchquetschventilaktor selbst ist beispielswiese elektrisch angetrieben, wobei das Basismodul hierzu über eine externe Energiequelle mit elektrischer Energie versorgt wird.

Mithin ist es zweckmäßig, wenn die Steuermittel in dem Trainingsmodul zumindest ein selbstsperrendes Schlauchquetschventil aufweisen. Über die Kombinationsschnittstelle kann die, beispielsweise vom Schlauchquetschventilaktor, erzeugte mechanische Energie vom Basismodul auf das Trainingsmodul übertragen werden und das selbstsperrende Schlauchquetschventil geöffnet wird. Das Schlauchquetschventil kann hierbei so angeordnet sein, dass ein das Verbrauchsmedienvolumen mit einer Austrittsstelle verbindenden Verbindungselement, beispielsweise einen Schlauch, stufenlos steuerbar quetschen kann. Durch die Selbstsperrung des Schlauchquetschventils kann verhindert werden, dass das zumindest eine Verbrauchsmedium durch die Austrittsstelle an den anatomischen Strukturen austritt, wenn das Trainingsmodul nicht mit dem Basismodul verbunden ist. Auf die Weise kann das Trainingsmodul so transportiert werden, dass keine weiteren Verbrauchsmedien austreten und das Trainingsmodul verschmutzen. Es ist ebenso denkbar, selbstöffnende Ventile zu verwenden oder eine Kombination aus selbstsperrenden und selbstöffnenden.

Um dem Trainierenden ein Gefühl für die Konsequenzen seiner Handlungsschritte zu vermitteln und ihn ggf. akustisch, visuell und/oder taktil auf seine Fehler, durch beispielsweise zu hohe interoperative Belastungen, hinzuweisen, ist es zweckmäßig, dass das Basismodul ein, zumindest eine physikalische Größe messendes Sensorikmodul aufweist. Dabei ist aber möglich, dass beispielsweise Messumformer gegebenenfalls im Trainingsmodul sitzen. Hierbei ist es vorteilhaft, dass Sensorikmodul und Trainingsmodul über die Kombinationsschnittstelle lösbar verbundene Messmittel aufweisen. Durch die Aufteilung der Messmittel in das Basismodul und das Trainingsmodul können die Herstellungs- und Betriebskosten des Trainingssystems weiter gesenkt werden. Über die Kombinationsschnittstelle kann die vom Sensorikmodul bereitgestellte Energie und/oder elektrischen Signale zum Steuern der Messmitel vom Basismodul auf das Trainingsmodul übertragen werden. Umgekehrt können erfasste physikalische Größen vom Trainingsmodul auf Sensorikmodul durch elektrische Signale übertragen werden. Das Sensorikmodul wiederum kann die gemessenen physikalischen Größen in Form elektrischer Signale an eine externe Auswerteeinheit, außerhalb des Basismoduls, übertragen.

Zweckmäßig ist es, dass die Messmittel im Trainingsmodul zumindest einen Ultraschallsender und zumindest einen korrespondierenden Ultraschallempfänger aufweisen. Dazu können beispielsweise Ultraschall-Kapseln, welche elektrische Signale in akustische Druckwellen umwandeln, verwendet werden. Bei der Verwendung eines Ultraschallsenders (Sender) und eines korrespondierenden Ultraschallempfängers (Empfänger) kann das sogenannte Zwei-Kapsel-Messprinzip verwendet werden. Dabei erzeugt eine Ultraschall-Kapsel als Sender einen akustischen Druckimpuls im Ultraschall-Frequenzbereich, welche längs in ein Messmedium übertragen wird, dieses durchquert und am anderen Ende durch eine Ultraschall-Kapsel als Empfänger wieder in ein elektrisches Signal gewandelt wird. Erfindungsgemäß kann jedoch auch das Ein-Kapsel-Messprinzip verwendet werden. Hierbei fungiert eine Ultraschall-Kapsel als Sender und Empfänger. Es wird nun nicht mehr der übertragene Impuls gemessen, sondern Reflektionen welche auf Grund des Übertragungsverhaltens entstehen.

Mithin ist es zweckmäßig, dass die Messmittel im Trainingsmodul zumindest ein luftgefülltes Verbindungsmittel aufweisen. Dieses Verbindungsmittel kann beispielsweise als Silikonschlauch ausgebildet sein, so dass es elastisch verformbar ist.

Weiterhin kann vorgesehen sein, dass das erste Ende des Verbindungsmittels mit dem Ultraschallsender und das zweite Ende des Verbindungsmittels mit dem Ultraschallempfänger verbunden ist, so dass das Zwei-Kapsel-Messprinzip verwendet werden kann. Für das Ein-Kapsel-Messprinzip kann vorgesehen sein, dass das eine Ende des luftgefüllten Verbindungselementes luftdicht verschlossen ist, wobei das andere Ende des luftgefüllten Verbindungselementes mit einer Ultraschall-Kapsel verbunden ist, die als Sender und Empfänger fungiert. Unabhängig welches Messprinzip verwendet wird, bildet das luftgefüllte Verbindungselement das Messmedium. Die Inkorporation von Luft in das Messmedium ermöglicht die Verwendung niederfrequenten Ultraschalls, was die Kosten für Sensoren und Elektronik um ein vielfaches derer hochfrequenter Systeme reduziert.

Zweckmäßig ist es, dass das Verbindungsmittel an oder in den anatomischen Strukturen angeordnet ist, wobei die anatomischen Strukturen und die Verbindungsmittel miteinander wechselwirken und eine Verformung der anatomischen Struktur durch eine Traktion und/oder eine Kompression des Verbindungsmittels messbar ist/sind. Erfindungswesentlich ist die gleichzeitige Messung von Kompression und Traktion (Dehnung) durch die Messmittel mit Hilfe eines Kombinationsmessverfahrens. Somit entfällt die Notwendigkeit der Verwendung multipler Messmittel und Messverfahren. Es können auch mehrere Verbindungsmittel vorgesehen sein, um die Kompression und Traktion voneinander beabstandete Bereiche der anatomischen Strukturen messen zu können.

Vorteilhaft an der Integration eines Teils der Messmittel in das Trainingsmodul ist, dass dieser Teil der Messmittel so vorbereitet, beispielsweise kalibriert, werden kann, dass der Verwender des Trainingssystems von diesen zeitintensiven Arbeiten befreit wird.

Grundsätzlich können erfindungsgemäß auch andere Messmittel, beispielsweise mit Sensoren, zum Erfassen anderer physikalischer Größen wie Dehnung, Druck, Temperatur o.Ä. vorgesehen sein.

Erfindungsgemäß kann auch vorgesehen sein, dass das Basismodul ein elektrische Signale verarbeitendes Controllermodul aufweist, welches mit einer Benutzerschnittstelle zur Bedienung des Trainingssystems verbindbar ist. Das Controllermodul kann beispielsweise geeignet sein, die Fördermittel und/oder die Steuermittel und/oder die Messmittel über elektrische Signale zu steuern und elektrisch Signale, beispielsweise als gemessene physikalische Größen des Sensorikmoduls zu empfangen. Einzelne elektrische Signale sind mit einer Benutzerschnittstelle austauschbar, die mit dem Controllermodul kabellos oder auch kabelgebunden verbindbar ist. Dem zu Trainierenden kann hierdurch beispielsweise eine direkte visuelle und/oder taktile und/oder akustische Rückmeldung während des Trainings gegeben werden. Desweiteren können mittels der Benutzerschnittstelle andere Parameter des Trainings, wie beispielsweise die Menge und Dauer einer Blutung oder andere Ereignisse eingestellt werden.

Die Erfindung soll nachfolgend anhand eines Ausführungsbeispiels näher erläutert werden. In den zugehörigen Zeichnungen zeigt

Fig. 1       eine isometrische Ansicht eines Basismoduls eines erfindungsgemäßen Trainingssystems,

Fig. 2       eine isometrische Ansicht des Basismoduls und ein damit verbundenes Trainingsmodul desselben erfindungsgemäßen Trainingssystems,

Fig. 3       eine geschnittene Seitenansicht durch das Basismodul und das Trainingsmodul mit dargestellten Fördermitteln desselben erfindungsgemäßen Trainingssystems,

Fig. 4       eine geschnittene Seitenansicht durch das Basismodul und das Trainingsmodul mit dargestellten Steuermitteln desselben erfindungsgemäßen Trainingssystems,

Fig. 5       eine Anordnung von Messmitteln an anatomischen Strukturen des Trainingsmoduls,

Fig. 6       eine schematische Darstellung des Ein-Kapsel-Messprinzips,

Fig. 7a       eine schematische Darstellung des Zwei-Kapsel-Messprinzips,

Fig. 7b       eine qualitative Darstellung eines sich verändernden gemessenen Signals in Abhängigkeit der Verformung der Messmittel,

Fig. 8       eine schematische Darstellung unterschiedlicher Koppelstücke der Messmittel und

Fig. 9       eine Anordnung der Messmittel an den anatomischen Strukturen des Trainingsmoduls mit Kennzeichnung der Kraftwirkung auf die Messmittel.

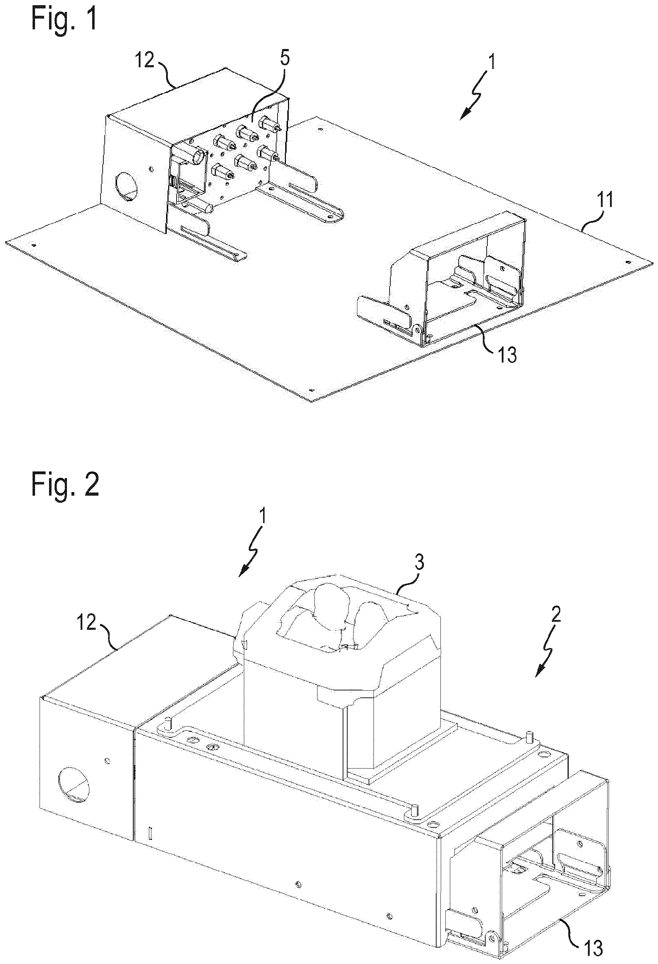

Die Fig. 1 bis 9 zeigen ein erfindungsgemäßes modulares chirurgisches Trainingssystem zum Trainieren chirurgischer Eingriffe. Das erfindungsgemäße modulare chirurgische Trainingssystem ist aufgrund seines modularen Aufbaus besonders anwenderfreundlich und kostenoptimiert ausgebildet.

Fig. 1 und Fig. 2 verdeutlichen die Vorteile des modularen Aufbaus. Fig. 1 zeigt eine isometrische Ansicht eines Basismoduls 1 des erfindungsgemäßen Trainingssystems. Das Basismodul 1 weist eine Grundplatte 11 auf, die jedoch in Fig. 2 nicht dargestellt ist. Die Grundplatte 11 kann lösbar mit einer nicht dargestellten Struktur verbunden sein, so dass ein Verrutschen des Basismoduls 1 vermieden wird. An der Grundplatte 11 sind sowohl ein Aktorikmodul 12, auf der linken Seite der Fig. 1, sowie eine Verriegelung 13, auf der rechten Seite der Fig. 1, angeordnet. Im Aktorikmodul 12 sind wiederverwendbare kostenintensive Komponenten der Fördermittel 6, der Steuermittel 7 und der Messmittel 8 angeordnet. Andere Komponenten dieser Fördermittel 6, Steuermittel 7 und Messmittel 8 sind im Trainingsmodul 2 angeordnet. Hierzu zählen auch Materialien, die während eines Trainings verbraucht werden, sogenannten Verbrauchsmaterialien, wie beispielsweise anatomische Strukturen 3 oder durch zumindest ein Verbrauchsmedium 4 simulierte Körperflüssigkeiten, welches in Fig. 1 und 2 jedoch nicht dargestellt ist.

Das Basismodul 1 kann weiterhin einen nicht dargestellten Torso aufweisen, der so am Basismodul 1 und/oder einer anderen Struktur angeordnet ist, dass die anatomischen Strukturen 3 an ihrer entsprechenden Stelle des menschlichen Körpers platziert sind, um so die Schwierigkeiten des Zugangs zu den anatomischen Strukturen 3 zu simulieren. Die anatomischen Strukturen 3 dieses Ausführungsbeispiels stellen einen Bereich der menschlichen Lendenwirbelsäule dar. Da die anatomischen Strukturen 3 auswechselbar am Trainingsmodul 2 angeordnet sind, können auch andere Bereiche des menschlichen aber auch des tierischen Körpers nachgebildet werden. Hierdurch ist das modulare Trainingssystem besonders flexibel ausgebildet.

Zum Verbinden des Trainingsmoduls 2 mit dem Basismodul 1 ist eine Kombinationsschnittstelle 5 vorgesehen. Die Kombinationsschnittstelle 5 umfasst in diesem Ausführungsbeispiel nicht weiter bezeichnete Anschlüsse, wobei jeweils Anschlüsse zur Übertragung pneumatischer, mechanische und elektrische Energie vom Basismodul 1 zum Trainingsmodul 2 vorgesehen sind. Weiterhin sind Anschlüsse vorgesehen mittels derer elektrische Signale zwischen Basismodul 1 und Trainingsmodul 2 austauschbar sind. Die Bezeichnung Kombinationsschnittstelle 5 ist hierbei so gewählt, da verschiedene Energien oder Energieträger über eine gemeinsame, kombinierte Schnittstelle (Kombinationsschnittstelle 5) übertragbar sind. Hierüber können auch Medien, wie beispielsweise Flüssigkeiten übertragen werden. Das Trainingsmodul 2 weist zum Basismodul 1 korrespondierende Anschlüsse auf, so dass das Basismodul 1 und Trainingsmodul 2 über die Kombinationsschnittstelle 5 miteinander lösbar verbindbar sind. Zur Sicherung der Verbindung ist eine Verriegelung 13 vorgesehen, die als Spannhebel ausgebildet ist.

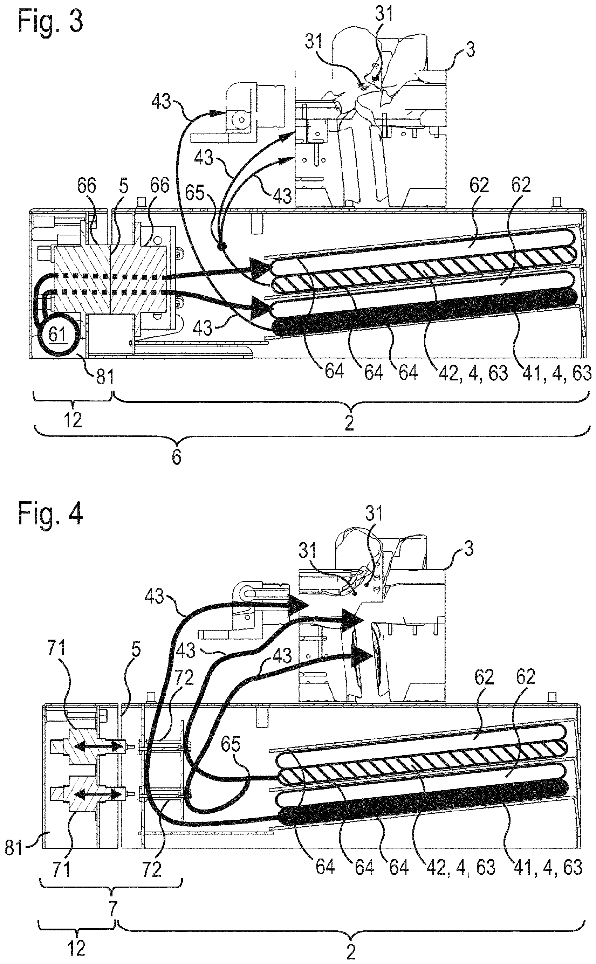

Fig. 3 bis Fig. 5 sollen schematisch die Anordnung der in Fig. 1 und 2 nicht oder nur abschnittsweise abgebildeten Fördermittel 6, Steuermittel 7 und Messmittel 8 an Basismodul 1 und Trainingsmodul 2 darstellen. Aufgrund des modularen Aufbaus des Trainingssystems weisen sowohl Basismodul 1 als auch Trainingsmodul 2 jeweils Komponenten der Fördermittel 6, Steuermittel 7 und Messmittel 8 auf.

Zunächst soll auf die Ausbildung der Fördermittel 6 eingegangen werden, die schematisch in Fig. 3 dargestellt sind. Grundsätzlich sind die Fördermittel 6 dazu vorgesehen, zumindest ein Verbrauchsmedium 4 in die anatomischen Strukturen 3 zu fördern. In diesem Ausführungsbeispiel, welches, wie oben dargelegt, einen Bereich der menschlichen Lendenwirbelsäule nachbildet, ist vorgesehen, zwei Verbrauchsmedien 4 in anatomische Strukturen 3 zu fördern. Das erste Verbrauchsmedium 4 simuliert dabei Blut 42. Das Blut 42 wird so in die anatomischen Strukturen 3 gefördert, dass es durch Austrittsstellen 31 aus den anatomischen Strukturen 3 austritt. Das zweite Verbrauchsmedium 4 simuliert Gehirn-Rückenmarks-Flüssigkeit 41. Die Gehirn-Rückenmarks-Flüssigkeit 41 wird so in die anatomischen Strukturen 3 gefördert, dass sie den Innendruck der Dura bzw. der einzelnen Nervenwurzeln simuliert, die von den anatomischen Strukturen 3 nachgebildet sind. Diesbezüglich unterscheidet sich dieses Ausführungsbeispiel des modularen Trainingssystem vom Stand der Technik, da zwei unterschiedliche Verbrauchsmedien 4 verwendet werden.

In der geschnitten Seitenansicht gemäß Fig. 3 ist das Aktorikmodul 12 des Basismoduls 1 auf der linken Seite abgebildet. Im Aktorikmodul 12 ist ein Luftverdichter 61 angeordnet, wobei der Luftverdichter 61 über eine nicht dargestellte externe Spannungsquelle mit elektrischer Energie versorgt wird. Hierzu weist das Basismodul 1 einen nicht dargestellten Anschluss auf, welcher mit dieser Spannungsquelle verbindbar ist. Die elektrische Energie dieser externen Spannungsquelle wird auch für die Versorgung der Steuermittel 7, der Messmittel 8 aber auch nicht dargestellter anderer Mittel verwendet. Der Luftverdichter 61 erzeugt pneumatische Energie in Form von Luftdruck.

Über jeweils ein paar nicht weiter bezeichneter Schlauchverbindungen sowie Steckverbinder 66 an der Kombinationsschnittstelle 5, ist der Luftverdichter 61 mit jeweils einem, im Trainingsmodul 2 angeordneten, Druckvolumen 62 verbunden, hierbei sollen die Pfeile in Fig. 3 die Verbindung schematisch andeuten. Jedem Druckvolumen 62 ist ein korrespondierendes Verbrauchsmedienvolumen 63 zugeordnet. In dem einen Verbrauchsmedienvolumen 63 ist Blut 42 angeordnet, in dem anderen Verbrauchsmedienvolumen 63 ist Gehirn-Rückenmarks-Flüssigkeit 41 angeordnet. Druckvolumen 62 und Verbrauchsmedienvolumen 63 sind als Druckbeutel ausgebildet und beispielsweise aus Kunststoff hergestellt. Jeweils ein Paar korrespondierender Druckvolumen 62 und Verbrauchsmedienvolumen 63 ist zwischen einem Paar Platten 64 angeordnet. Wobei Paare dieser Platten 64 auch gemeinsame Platten 64 aufweisen können. Durch den begrenzten Raum zwischen den Platten 64 wird eine durch den erhöhten Luftdruck bedingte Volumenvergrößerung des Druckvolumens 62 auf das Verbrauchsmedienvolumen 63 übertragen, wodurch dieses komprimiert wird. Da das Verbrauchsmedium 4 jedoch im Wesentlichen inkompressibel ist, weicht es der Volumenvergrößerung des Druckvolumens 62 aus. Über entsprechende, aber nicht dargestellte sondern nur durch Pfeile angedeutete, Schlauchverbindungen kann das Blut 42 zu den Austrittsstellen 31 gefördert werden.

Alle Austrittsstellen 31 können hierbei aus einem Verbrauchsmedienvolumen 63 mit Blut 42 versorgt werden. Dafür ist ein Verteiler 65 vorgesehen, der das Blut 42 in einzelne Volumenströme 43 aufteilt. Über entsprechende, aber nicht weiter bezeichnete, Schlauchverbindungen kann die Gehirn-Rückenmarks-Flüssigkeit 41 in von den anatomischen Strukturen 3 nachgebildete Dura und die Nervenwurzeln gefördert werden. Dabei tritt die Gehirn-Rückenmarks-Flüssigkeit 41 jedoch nicht aus den anatomischen Strukturen 3 aus, sondern simuliert den inneren Druck der anatomischen Strukturen 3. Wird die anatomische Struktur verletzt, beispielsweise eine Dura-Perforation erzeugt, dann tritt jedoch Flüssigkeit aus.

Ein wesentlicher Vorteil der vorliegenden Erfindung besteht darin, dass die Verbrauchsmedien 4 nicht über die Kombinationsschnittstelle 5 übertragen werden. Die verbrauchten Verbrauchsmedien 4 und die verbrauchten anatomischen Strukturen 3 verbleiben ausschließlich im Trainingsmodul 2, welches nach dem Training vom Basismodul 1 nach Öffnen der Verriegelung 13 getrennt wird. Das Trainingsmodul 2 kann sodann, beispielsweise postalisch, an den Hersteller zurückgeschickt werden, der es einer Regenerierung unterzieht, um die anatomischen Strukturen 3 als auch die Verbrauchsmedien 4 zu erneuern. Hierdurch wird das Basismodul 1 vor Verschmutzung geschützt. Unmittelbar nach einem abgeschlossenen Training kann das Trainingsmodul 2 entfernt und durch ein neues, unverbrauchtes Trainingsmodul 2 ersetzt werden. Es entstehen keine Trainingsunterbrechungen durch eine zeitintensive Regenerierung, die das gesamte Trainingssystem betrifft, da die Basisstation 1 sofort wieder mit dem neuen, unverbrauchten Trainingsmodul 2 verbindbar ist, um das Training fortzusetzen.

Zum eigentlichen Dosieren der geförderten Verbrauchsmedien 4 sind Steuermittel 7 vorgesehen, die in der geschnitten Seitenansicht der Fig. 4 dargestellt sind. Im Aktorikmodul 12 sind hierzu zwei Schlauchventilquetschaktoren 71 angeordnet, wobei die Schlauchventilquetschaktoren 71 über die vorab benannte nicht dargestellte externe Spannungsquelle mit elektrischer Energie versorgt werden. In einer anderen Ausgestaltung der Erfindung können mehr als zwei Schlauchventilquetschaktoren 71 im Aktorikmodul 12 angeordnet sein. Vorteilhaft ist es, jedem Volumenstrom 43, der durch ein Verbrauchsmedium 4 gebildet wird, jeweils einen Schlauchventilquetschaktor 71 zuzuordnen.

Über nicht weiter bezeichnete mechanische Verbindungen kann mechanische Energie, in Form eines änderbaren Stellweges der Schlauchventilquetschaktoren 71, über die Kombinationsschnittstelle 5 übertragen werden. Dabei ist es auch möglich, den Durchfluss nicht nur über die Stellwege sondern auch über einen pulsweitenmodulierten Impulsbetrieb (zwischen den Zuständen Ein/Aus) zu steuern. Die eigentliche Einstellung der jeweiligen Volumenströme 43 zu den Austrittsstellen 31 erfolgt im Trainingsmodul 2 mittels dort angeordneter Schlauchquetschventile 72. Die Schlauchquetschventile 72 sind selbstsperrend und/oder selbstöffnend ausgebildet und können durch eine Druckkraft auf das Schlauchventilquetschventil 72 geöffnet werden. Die Druckkraft wird hierbei durch die Schlauchventilquetschaktoren 71 bereitgestellt und über die Kombinationsschnittstelle 5 in Form mechanischer Energie übertragen. Im vorliegenden Ausführungsbeispiel sind zwei Schlauchquetschventile 72 vorgesehen, so dass die Volumenströme 43 der beiden Austrittsstellen 31 separat eingestellt werden können.

Durch die Anordnung von Fördermitteln 6 und Steuermitteln 7 kann grundsätzlich die Förderung der Verbrauchsmedien 4 von der Dosierung der Verbrauchsmedien 4 entkoppelt werden. Zudem kann hierdurch die Querbeeinflussung der Volumenströme 43 unterschiedlicher Austrittsstellen 31 bei Veränderung der Stellung der Schlauchquetschventile 72 reduziert werden. Da die Schlauchquetschventile 72 im Trainingsmodul 2 angeordnet sind, entfällt zudem deren aufwendige Justierung durch den Benutzer, vielmehr kann die Justierung durch den Hersteller, bei der Regenerierung des Trainingsmoduls 2 durchgeführt werden. Dies gilt ebenso für die Entlüftung der Fördermittel 6, die bereits bei Regenerierung durchgeführt werden kann. Durch die Anordnung der Verbrauchsmedien 4 im Trainingsmodul 2 kann auf einen Verbrauchsmedientank gemäß dem Stand der Technik verzichtet werden. Hierdurch wird die Gefahr einer Verstopfung oder einer Verklebung des Fördermittels 6 mit Verbrauchsmedien 4 nahezu ausgeschlossen, da die verbrauchsmedienführenden Komponenten der Fördermittel 6 im Trainingsmodul 2 angeordnet sind und dieses regeneriert wird. Mit anderen Worten muss sich der Benutzer nicht mit dem Nachfüllen der Verbrauchsmedien 4 auseinandersetzen. Weiterhin vorteilhaft daran ist, dass der Benutzer des Trainingssystems keine zweitaufwendige Inbetriebnahme des Trainingssystems durchführen muss, da die Fördermittel 6 schon mit den Austrittsstellen 31 verbunden sind.

Um dem Trainierenden ein Gefühl für die Konsequenzen seiner Handlungsschritte zu vermitteln und ihn ggf. akustisch, visuell und/oder taktil auf seine Fehler, durch beispielsweise zu hohe interoperative Belastungen, hinzuweisen, ist es zweckmäßig, dass das Basismodul 1 ein, zumindest eine physikalische Größe messendes Sensorikmodul 81 aufweist. Das Sensorikmodul 81 ist der in der Basisstation 1 angeordnete Teil der Messmittel 8, wobei das Sensorikmodul 81 elektrische Energie über die Kombinationsschnittstelle 5 an den im Trainingsmodul 2 angeordneten Teil der Messmittel 8 übertragen kann. Zur Übertragung von beispielsweise Steuersignalen oder Messsignalen können die Messmittel 8 über die Kombinationsschnittstelle 5 elektrische Signale austauschen.

Wie bereits dargelegt sind typische, bei der OP entstehende, Belastungsarten auf Risikostrukturen wie Nerven und Gefäße Kompression 821 (Quetschung, Druckbelastung) und Traktion 822 (Dehnung, Zugbelastung). Elastische Gewebe reagieren sehr variabel auf Belastungen, da die Verformung als Folge eines Krafteintrages abhängt von Volumen, Materialeigenschaften, äußere Form und Einbettung.

Kompression 821 und Traktion 822 können überall an den anatomischen Strukturen 3 auftreten. Zur lokalen Messung dieser Belastungen können in einem anderen Ausführungsbeispiel ein- oder mehrdimensionale Dehnungsmessstreifen oder auch direkt ein- oder mehrdimensionale Kraftmessdosen verwendet werden. Diese Ausführungsform ist jedoch sehr kosten- und materialintensiv, da eine Vielzahl einzelner Dehnungsmessstreifen oder Kraftmessdosen auf, an oder in den anatomischen Strukturen 3 appliziert werden müssten.

Hingegen findet Ultraschall im Puls-Verfahren unter Verwendung eines Messkopfes zum Senden und Empfangen breite Anwendung im Bereich medizinischer Bildgebungsverfahren und Therapien, aber auch zum Beispiel im Bereich der Materialprüfung. Grundlage ist die Messung reflektierter Ultraschall-Wellen und das Auswerten der Laufzeit der Signale, um beispielsweise innere Organe oder Defekte in Bauteilen abzubilden. Nachteilig ist die für eine ausreichend hohe Auflösung und Genauigkeit notwendige sehr hohe Ultraschall-Frequenz. Ebenso muss eine stetige Justierung dieser Systeme nur durch Fachpersonal durchgeführt werden.

Die Messmittel 8 dieses Ausführungsbeispiels umfassen das Sensorikmodul 81 im Basismodul 1 sowie einen Ultraschallsender 83, einen Ultraschallempfänger 84 und ein luftgefülltes Verbindungsmittel 82, das gleichzeitig das Messmedium 82 bildet, im Trainingsmodul 2. In einem anderen Ausführungsbeispiel ist kein Messmedium 82 vorgesehen. Mit der Verwendung des Messmediums 82 kann jedoch die Integration der Messmittel 8 in die anatomischen Strukturen 3 erleichtert werden.

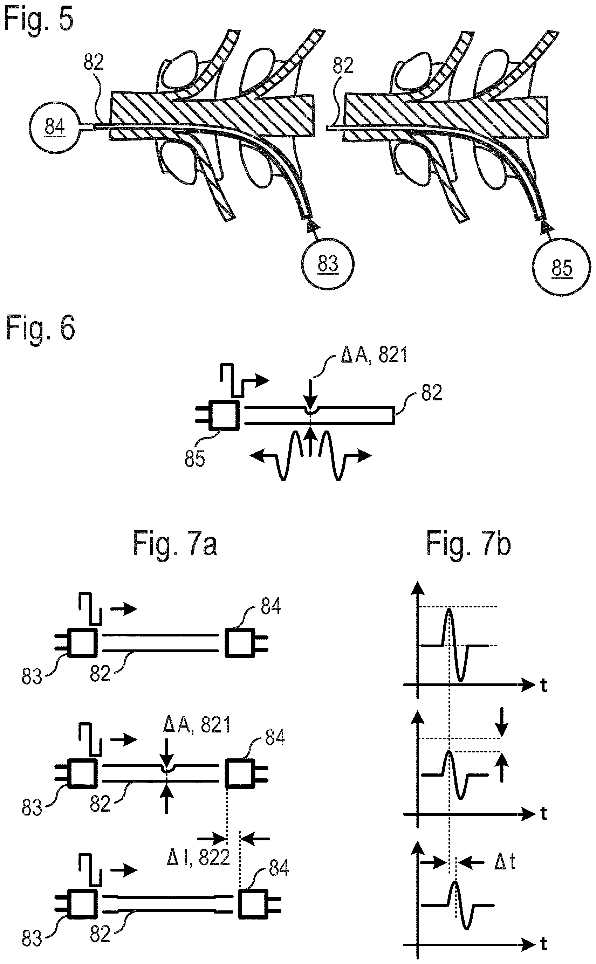

Eine Wechselwirkung der anatomischen Strukturen 3, die in Fig. 5 zumindest abschnittsweise abgebildet sind und eine Dura mit Nervenwurzeln als auch Wirbelkörper aufweisen, mit dem Messmedium 82, beispielsweise durch die Interaktion des Trainierenden mit den anatomischen Strukturen 3, bedingt eine Änderung der geometrischen Eigenschaften des Messmediums 82. Zur Erfassung dieser Änderung werden Ultraschall-Kapseln, welche elektrische Signale in akustische Ultraschall-Wellen umwandeln, an offenen Enden des luftgefüllten Messmediums 82 platziert. Fig. 5 zeigt zwei mögliche Konfigurationen, zur Ausbildung der Messmittel 8. Hierzu ist das Messmedium 82 in Teile der Dura und in eine Nervenwurzel eines Wirbels integriert, d.h. im Inneren der mit Gehirn-Rückenmarks-Flüssigkeit 41 gefüllten anatomischen Struktur 3.

Beim Zwei-Kapsel-Messprinzip, welches im linken Bereich der Fig. 5 dargestellt ist, erzeugt eine Ultraschall-Kapsel als Ultraschallsender 83 einen Ultraschall-Welle im Ultraschall-Frequenzbereich, welche längs in das Messmedium 82 übertragen wird, das Messmedium 82 durchläuft und am anderen Ende durch eine Ultraschall-Kapsel als Ultraschallempfänger 84 wieder in ein elektrisches Signal gewandelt wird.

Beim Ein-Kapsel-Prinzip, welches im rechten Bereich der Fig. 5 dargestellt ist, fungiert eine Ultraschall-Kapsel als Ultraschallsendeempfangseinheit 85, wobei nicht der übertragene Impuls gemessen, sondern dessen Reflektionen, welche auf Grund des Übertragungsverhaltens entstehen, gemessen wird.

Ultraschall-Kapseln besitzen i.A. einen Querschnitt größer dem des Messmediums 82. Dies vor allem dann, wenn das Messmedium 82 sehr klein ausgeführt ist, um in kleine anatomische Strukturen 3 angeordnet zu werden. Somit muss eine Kopplung bereitgestellt werden, um die Ultraschall-Kapseln 83, 84, 85 an den Enden des Messmediums 82 anzuordnen und die Ultraschall-Wellen vom großen Querschnitt der Ultraschall-Kapseln 83, 84, 85 auf den kleinen Querschnitt des Messmediums 82 einzukoppeln bzw. vom kleinen Querschnitt wieder auf den großen Querschnitt auszukoppeln. Entsprechend werden geeignete Koppelmedien 86 verwendet. Das besondere dieser Koppelmedien 86 ist, dass diese ein bestimmtes Querschnittsprofil als Verlängerung des Messmediums 82 aufweisen.

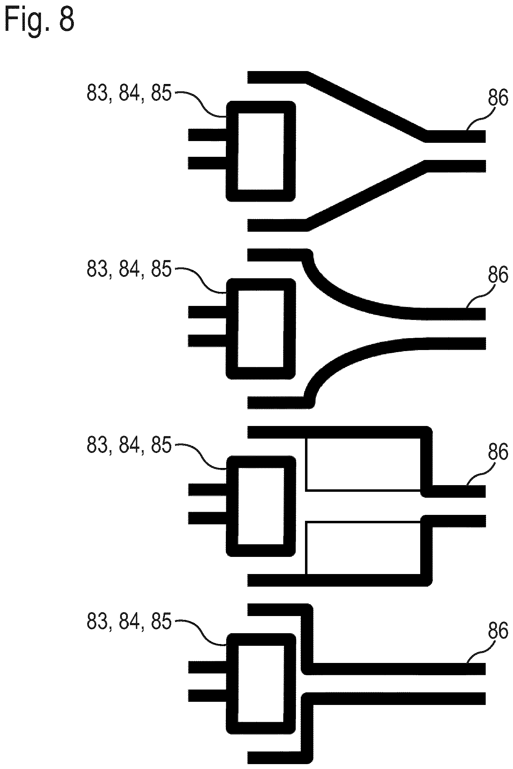

Unterschiedliche Ausbildungen der Koppelmedien sind beispielhaft in Fig. 8 untereinander dargestellt, wobei diese jeweils unterschiedliche Vor- und Nachteile aufweisen. So ist der in Fig. 8 ganz oben dargestellte Lineartrichter geeignet, sehr viel Energie vom Ultraschallsender 83 oder der Ultraschallsendeempfangseinheit 85 auf das Messmedium 82 zu übertragen. In Umgekehrter Richtung vom Messmedium 82 auf den Ultraschallempfänger 84 oder die Ultraschallsendeempfangseinheit 85 gilt das gleiche. Der als zweites von oben in Fig. 8 dargestellte Exponentialtrichter weist einen hyperbolischen Übergang auf, welcher den Querschnitt des Messmediums 82 zu den Ultraschall-Kapseln derart anpasst, dass keine messbaren Reflexionen am Koppelmedium 86 auftreten. Als drittes von oben in Fig. 8 ist ein Koppelmedium 86 mit einem Schalldämpfer dargestellt, wobei der Querschnittsübergang durch einen Absatz gebildet ist. Der Schalldämpfer dämpft die eindringenden Ultraschall-Wellen und lässt nur eine schmale, auf den Innendurchmesser des Messmediums 82 angepasste, Passage zum Übergang in oder aus dem Messmedium 82 frei. Hierdurch wird eine sehr ebene Ultraschall-Welle in das Messmedium 82 übertragen. Vorteilhaft ist hierbei, dass das zu erfassende elektrische Signal eine sehr gute, d.h. wenig gestörte, Signalform aufweist. Als viertes von oben in Fig. 8 ist ein Wandtrichter dargestellt, der geometrisch so wie der Trichter mit Schalldämpfer ausgebildet ist, jedoch keinen Schalldämpfer aufweist.

Zur Verarbeitung der elektrischen Signale von und zu den Ultraschall-Kapseln 83, 84, 85 umfasst das Sensorikmodul 81 nicht dargestellte analoge und digitale Schaltungsteile. Über einen Digital-Analog-Wandler werden Signalformen für das Senden bereitgestellt, verstärkt und an den Ultraschallsender 83 oder die Ultraschallsendeempfangseinheit 85 weitergeleitet. Über einen Analog-Digital-Wandler wird das empfangene Signal des Ultraschallempfängers 84 oder der Ultraschallsendeempfangseinheit 85 nach Filterung und Verstärkung in digitale Werte in Form elektrischer Signale, gewandelt. Die Verarbeitung dieser digitalisierten Werte durch einen nicht dargestellten Prozessor ist Grundlage der Berechnung der ursächlichen Belastungen durch Krafteinwirkung. Hierzu kann weiterhin vorgesehen sein, dass der nicht dargestellten Prozessor Befehle einer anpassbaren und gesondert im Sensorikmodul 81 speicherbaren Software aufweist.

Im Folgenden wird im Zusammenhang mit Fig. 6 und Fig. 7a und Fig. 7b beschrieben, wie aus einer Einwirkung auf die anatomischen Strukturen 3 Rückschlüsse auf die erfolgten Krafteinleitungen gezogen werden können.

Bei der Ausbreitung einer Ultraschall-Welle im Messmedium 82 kommt es bei jeder Querschnittsänderung $\Delta A$ des Messmediums 82 zu einer Veränderung der Schallimpedanzen und damit zu Reflexionserscheinungen. Dies führt bei Durchquerung der Ultraschall-Welle durch eine solche Stelle mit Querschnittsänderung $\Delta A$ zu einer veränderlichen Schallimpedanz und zur Aufteilung der Ultraschall-Welle in einen reflektierten und übertragenen Teil, vgl. die schematisch dargestellten Ultraschall-Wellen in Fig. 6. Der reflektierte Teil wird zum Ultraschallsender 83 oder zur Ultraschallsendeempfangseinheit 85 zurückgeworfen. Der übertragene Teil behält die Richtung der ursprünglichen Ultraschall-Welle bei. Die Aufteilung der Energie der ursprünglichen Ultraschall-Welle ist abhängig vom Betrag der Querschnittsänderung $\Delta A$. Ohne Querschnittsänderung $\Delta A$ findet keine Reflexion statt, bei zunehmender Querschnittsänderung $\Delta A$ vergrößert sich der Energieanteil der reflektierten Ultraschall-Welle und die übertragene Ultraschall-Welle wird gedämpft.

Wie dargelegt werden zwei Messprinzipien unterschieden. Beim Zwei-Kapsel-Messprinzip wird der übertragene Anteil der Ultraschall-Welle im Ausgangssignal detektiert und ausgewertet. Zur Verdeutlichung des Zwei-Kapsel-Messprinzips sind in Fig. 7a von oben nach unten der ungestörte Ausgangszustand des Messmedium 82, das Messmedium 82 mit Querschnittsänderung $\Delta A$ und das Messmedium 82 mit Längenänderung $\Delta l$ dargestellt. In Fig. 7b sind die entsprechenden vom Ultraschallempfänger 84 gewandelten elektrischen Signale qualitativ, beispielsweise als elektrische Spannung über der Zeit t dargestellt.

Der Ultraschallsender 83 sendet Ultraschall-Pulse endlicher Länge in festen periodischen Abständen zueinander. Bei Nichtbelastung des Messmediums 82 entspricht das elektrische Signal des Ultraschallempfängers 84 der ungestört übertragenen Ultraschall-Welle. Dieses wird im Zustand der Nichtbelastung auf den Eingangssignalbereich des Analog-Digital-Umsetzers angepasst.

Bei einer orthogonalen Belastung kommt es aufgrund der Querschnittsänderung $\Delta A$ zu einer Abnahme der Energie des übertragenen Ultraschall-Pulses und damit zu einer Verringerung der Amplitude des elektrischen Signals im Vergleich zum ursprünglichen Signal ohne Belastung. Der Unterschied der Energien ist nun Maß der Querschnittsänderung ΔA, sodass ein Dämpfungsparameters D definiert werden kann:

$$D = \frac{E_1}{E_0}$$

welcher abhängig von dem Maß der Querschnittsänderung ΔA ist. Der übertragene Ultraschall-Puls besitzt die Energie $E_1$ und der ursprüngliche Ultraschall-Puls ohne Belastung die Energie $E_0$.

Bei einer Belastung in Längsrichtung des Messmediums 82 kommt es aufgrund der Längenänderung Δl zu einem zeitlichen Versatz Δt des übertragenen Ultrschall-Pulses im auszuwertenden elektrischen Signal im Vergleich zum ursprünglichen elektrischen Signal ohne Belastung. Mittels dieses zeitlichen Versatzes Δt kann die Längenänderung Δl berechnet werden:

$$\Delta l = c_L \Delta t$$

wobei $C_L$ die Geschwindigkeit der Ultraschall-Welle im Messmedium 82 ist und mit Hilfe der Temperatur im Inneren des Messmediums 82 berechnet wird.

Die ursächliche, komprimierend wirkende Kraft $F_K$ kann durch Kalibrierung als Funktion der Längenänderung Δl und Dämpfung D berechnet werden. Gleiches gilt für die ursächliche, längenändernd wirkende Kraft $F_T$:

$$F_K = f_1(\Delta l, D), \ F_T = f_2(\Delta l, D)$$

wobei die komprimierend wirkende Kraft $F_K$ hauptsächlich von der Dämpfung D abhängig ist und die längenändernd wirkende Kraft $F_T$ von der Längenänderung Δl.

Wie dargelegt wird beim Ein-Kapsel-Messprinzip wird der reflektierte Anteil der Welle im Ausgangssignal detektiert und ausgewertet. Die von der Ultraschallsendeempfangseinheit 85 eingebrachte Ultraschall-Welle wird am abgeschlossenen Ende vollständig reflektiert und bewegt sich zurück zur Ultraschallsendeempfangseinheit 85, welche nun als Empfänger die Ultraschall-Welle wieder in ein elektrisches Signal wandelt, welches Gegenstand der Auswertung ist.

Im Zustand der Nichtbelastung des Messmediums 82 liegt ein identisches Signal wie in Fig. 7a und Fig. 7b oben dargestellt vor. Im Gegensatz zum Zwei-Kapsel-Prinzip durchquert die Ultraschall-Welle die doppelte Entfernung, so dass die absolute Laufzeit der Ultraschall-Welle die doppelte Länge der Messmediums 82 widerspiegelt.

Der Krafteintrag in Längsrichtung des Messmediums 82 gemäß Fig. 7a (Unten) führt zu einer Dehnung des Messmediums 82, was ebenfalls in einer Laufzeitverlängerung, einem zeitlichen Versatz Δt, der Ultraschall-Welle führt. Die Berechnungen bleiben identisch.

Der orthogonale Krafteintrag gemäß Fig. 7a (Mitte) führt zu einer Reflexion an der Stelle der Querschnittsänderung ΔA. Im Gegensatz zum Zwei-Kapsel-Prinzip nimmt die Amplitude des elektrischen Signals der Ultraschallsendeempfangseinheit 85 zu, je stärker der kompressibel wirkende Krafteintrag ist. Analog zum Zwei-Kapsel-Prinzip kann der Dämpfungsparameter D berechnet werden zu:

$$D = \frac{E_0 - E_1}{E_0}$$

welcher abhängig von der Querschnittsänderung ΔA ist. Die reflektierte Ultraschall-Welle weist die Energie $E_1$ und die ursprüngliche Ultraschall-Welle ohne Belastung die Energie $E_0$ auf. Vorteilhaft am Ein-Kapsel-Messprinzip ist, dass der Ort der Krafteinwirkung über die Laufzeit der Ultraschall-Welle ermittelbar ist.

Mittels des Dämpfungsparameters D und der Längenänderung Δl können die ursächlichen Kräfte in gleicher Weise, wie oben bereits beschrieben, ermittelt werden.

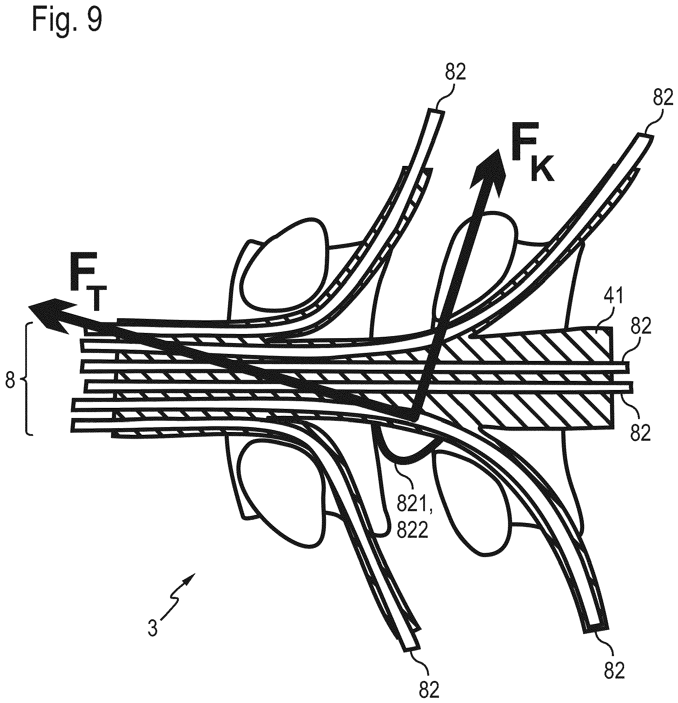

So können in einem weiteren Ausführungsbeispiel auch eine Vielzahl von Verbindungsmitteln, Messmedien 82 in den anatomischen Strukturen 3 angeordnet sein. Fig. 9 zeigt ein solches Ausführungsbeispiel in Anlehnung an das erste Ausführungsbeispiel der Fig. 1 bis Fig. 5. Die Messmedien 82 sind gemäß Fig. 9 so angeordnet, dass jeweils ein Messmedium 82 in einer Nervenwurzel angeordnet ist, wobei jeweils zwei Nervenwurzeln einem Wirbelkörper zugeordnet sind. Die Messmedien 82 wiederum sind innerhalb der Gehirn-Rückenmarks-Flüssigkeit 41 angeordnet, wobei diese wiederum einen Druck aufweisen kann, der von dem entsprechenden Fördermittel 6 erzeugt wird.

Ebenfalls in Fig. 9 dargestellt sind die über die Messmittel 8 zu bestimmende komprimierend wirkende Kraft $F_K$ und längenändernd wirkende Kraft $F_T$, beispielsweise als Reaktionskräfte einer Kompression 821 oder Traktion 822.

Besonders vorteilhaft an derart ausgebildeten Messmitteln 8 ist, dass die wirkenden Kräfte $F_K$ und $F_T$ an jeder beliebigen Position der Krafteinwirkung am Messmedium 82 bestimmbar sind. Mit anderen Worten kann eine Querschnittsänderung ΔA und/oder eine Längenänderung Δl integral über das gesamte Messmedium 82 bestimmt werden. Weiterhin vorteilhaft an derart ausgebildeten Messmitteln 8 ist, dass die wirkenden Kräfte $F_K$ und $F_T$ mit denselben Mittel, d.h. einem Ultraschallsender 83 mit einem korrespondierenden Ultraschallempfänger 84 oder einer Ultraschallsendeempfangseinheit 85, bestimmbar sind.

Die Bedienung des Trainingssimulators erfolgt über eine nicht dargestellte Benutzerschnittstelle, die kabellos oder kabelgebunden mit einem nicht dargestellten Controllermodul kommuniziert, wobei das Controllermodul am Basismodul 1 angeordnet ist, beispielsweise im Aktorikmodul 12. Die Benutzerschnittstelle kann beispielsweise als tragbares Endgerät als Laptop, Tablet-PC, Smartphone oder ähnliches ausgebildet sein.

Die Benutzerschnittstelle ist geeignet, von dem Controllermodul bereitgestellte elektrische Signale von den Fördermitteln 6, den Steuermitteln 7 und den Messmitteln 8 zu empfangen und über das Controllermodul elektrische Signale an die Fördermittel 6, die Steuermittel 7 und die Messmittel 8 zu senden. So kann beispielsweise die Höhe des Drucks der vom Luftverdichter 61 bereitgestellten Druckluft eingestellt werden. Weiterhin können die Volumenströme 43 von Blut 42 zu den jeweiligen Austrittsstellen 31 eingestellt werden. Außerdem kann vorgesehen sein, den aktuellen Druck der Druckluft und die aktuellen Volumenströme 43 qualitativ als auch quantitativ darzustellen. Ebenfalls visuell als auch akustisch darstellbar sind die Krafteinwirkungen des Trainierenden auf die anatomischen Strukturen 3, welche durch die Messmittel 8 bestimmbar sind. So kann dem Trainierenden augenblicklich eine Rückmeldung über die mechanischen Belastungen seiner Arbeit auf die anatomischen Risikostrukturen gegeben werden.

**Bezugszeichenliste**

| 1   | Basismodul |
| 11  | Grundplatte |
| 12  | Aktorikmodul |
| 13  | Verriegelung |
| 2   | Trainingsmodul |
| 3   | anatomische Strukturen |
| 31  | Austrittsstellen |
| 4   | Verbrauchsmedium |
| 41  | Gehirn-Rückenmarks-Flüssigkeit, simuliert |
| 42  | Blut, simuliert |
| 43  | Volumenstrom |
| 5   | Kombinationsschnittstelle |
| 6   | Fördermittel |
| 61  | Luftverdichter |
| 62  | Druckvolumen |
| 63  | Verbrauchsmedienvolumen |
| 64  | Platte |
| 65  | Verteiler |
| 66  | Steckverbinder |
| 7   | Steuermittel |
| 71  | Schlauchquetschventilaktor |
| 72  | Schlauchquetschventil |
| 8   | Messmittel |
| 81  | Sensorikmodul |
| 82  | Verbindungsmittel, Messmedium |
| 821 | Kompression |
| 822 | Traktion |
| 83  | Ultraschallsender |
| 84  | Ultraschallempfänger |
| 85  | Ultraschallsendeempfangseinheit |
| 86  | Koppelmedium |
| $\Delta A$ | Querschnittsänderung |
| $C_L$ | Geschwindigkeit der Ultraschall-Welle |
| $\Delta l$ | Längenänderung |
| $\Delta t$ | zeitlicher Versatz |
| D   | Dämpfungsparamter |
| $E_0$ | Energie des ursprünglichen Impulses |
| $E_1$ | Energie des übertragenen Impulses |
| $F_K$ | komprimierend wirkende Kraft |
| $F_L$ | längenändernd wirkende Kraft |
| t   | Zeit |

**Patentansprüche**

1.  Modulares chirurgisches Trainingssystem zum Trainieren chirurgischer Eingriffe umfassend

    - ein wiederverwendbares, energieversorgendes Basismodul (1),
    - ein regenerierbares, anatomische Strukturen (3) nachbildendes oder aufweisendes und zumindest ein Körperflüssigkeiten simulierendes Verbrauchsmedium (4) aufnehmbares Trainingsmodul (2), wobei
    - pneumatische und, optional, mechanische und/oder elektrische Energie vom Basismodul (1) zum Trainingsmodul (2) übertragbar und, optional, elektrische Signale zwischen Basismodul (1) und Trainingsmodul (2) übertragbar sind, und
    - zumindest ein das Verbrauchsmedium (4) in die anatomischen Strukturen (3) förderndes in dem Basismodul (1) und in dem Trainingsmodul (2) angeordnetes Fördermittel (6),

    **dadurch gekennzeichnet, dass** das Trainingsmodul (2) und das Basismodul (1) lösbar über eine Kombinationsschnittstelle (5), die Übertragung der pneumatischen und, optional, mechanischen und/oder elektrischen Energie vom Basismodul (1) zum Trainingsmodul (2) und, optional, der elektrische Signale zwischen Basismodul (1) und Trainingsmodul (2) realisierend, miteinander und die Fördermittel des Basismoduls über die Kombinationsschnittstelle (5) mit den Fördermitteln des Trainingsmoduls verbunden sind, dass die Fördermittel (6) in der Basisstation (1) zumindest einen pneumatische Energie in Form von Druckluft erzeugenden Luftverdichter (61) aufweisen, wobei die Fördermittel (6) in dem Trainingsmodul (2) zumindest ein die Druckluft aufnehmendes Druckvolumen (62) und zumindest ein, vom Druckvolumen (62) medienseitig getrenntes und ein Verbrauchsmedium (4) aufnehmendes Verbrauchsmedienvolumen (63) aufweisen, wobei Druckvolumen (62) und Verbrauchsmedienvolumen (63) miteinander wechselwirken, so dass zumindest ein Verbrauchsmedium (4) in die anatomischen Strukturen (3) förderbar ist und/oder ein Druck in der anatomischen Struktur erzeugt werden kann.

2. Modulares chirurgisches Trainingssystem nach Anspruch 1, **dadurch gekennzeichnet, dass** vom Trainingsmodul (2) zumindest zwei Verbrauchsmedien (4) aufnehmbar sind, wobei das erste Verbrauchsmedium (4) durch zumindest eine Austrittsstelle (31) der anatomischen Strukturen (3) durchleitbar ist und dass mittels des zweiten Verbrauchsmediums (4) der Innendruck zumindest eines Abschnitts der anatomischen Strukturen (3) nachbildbar ist.

3. Modulares chirurgisches Trainingssystem nach einem der vorhergehenden Ansprüche, **dadurch gekennzeichnet, dass** das Basismodul (1) und das Trainingsmodul (2) über die Kombinationsschnittstelle (5) lösbar verbundene zumindest einen Volumenstrom (43) steuerbare Steuermittel (7) aufweisen.

4. Modulares chirurgisches Trainingssystem nach Anspruch 3, **dadurch gekennzeichnet, dass** durch die Steuermittel (7) zumindest ein Volumenstrom (43) des zumindest einen Verbrauchsmediums (4) steuerbar ist.

5. Modulares chirurgisches Trainingssystem nach Anspruch 3, **dadurch gekennzeichnet, dass** die Steuermittel (7) im Basismodul (1) zumindest einen Schlauchquetschventilaktor (71) aufweisen.

6. Modulares chirurgisches Trainingssystem nach Anspruch 3, **dadurch gekennzeichnet, dass** die Steuermittel (7) im Trainingsmodul (2) zumindest ein selbstsperrendes und/oder selbstöffnendes Schlauchquetschventil (72) aufweisen.

7. Modulares chirurgisches Trainingssystem nach einem der vorhergehenden Ansprüche, **dadurch gekennzeichnet, dass** das Basismodul (1) ein, zumindest eine physikalische Größe messendes Sensorikmodul (81) aufweist.

8. Modulares chirurgisches Trainingssystem nach Anspruch 7, **dadurch gekennzeichnet, dass** Sensorikmodul (81) und Trainingsmodul (2) über die Kombinationsschnittstelle (5) lösbar verbundene Messmittel (8) aufweisen.

9. Modulares chirurgisches Trainingssystem nach Anspruch 8, **dadurch gekennzeichnet, dass** die Messmittel (8) im Trainingsmodul (2) zumindest einen Ultraschallsender (83) und zumindest einen korrespondierenden Ultraschallempfänger (84) aufweisen.

10. Modulares chirurgisches Trainingssystem nach Anspruch 9, **dadurch gekennzeichnet, dass** die Messmittel (8) im Trainingsmodul (2) zumindest ein luftgefülltes Verbindungsmittel (82) aufweisen.

11. Modulares chirurgisches Trainingssystem nach Anspruch 10, **dadurch gekennzeichnet, dass** das erste Ende des Verbindungsmittels (82) mit dem Ultraschallsender (83) und das zweite Ende des Verbindungsmittels (82) mit dem Ultraschallempfänger (84) verbunden sind.

12. Modulares chirurgisches Trainingssystem nach Anspruch 10, **dadurch gekennzeichnet, dass** das Verbindungsmittel (82) an oder in den anatomischen Strukturen (3) angeordnet ist, wobei die anatomischen Strukturen (3) und das Verbindungsmittel (82) miteinander wechselwirken und eine Verformung der anatomischen Struktur (3) durch eine Traktion und/oder eine Kompression des Verbindungsmittels (82) messbar ist.

13. Modulares chirurgisches Trainingssystem nach einem der vorhergehenden Ansprüche, **dadurch gekennzeichnet, dass** das Basismodul (1) ein elektrische Signale verarbeitendes Controllermodul (9) aufweist, welches mit einer Benutzerschnittstelle (10) zur Bedienung des Trainingssystems verbindbar ist.

**Claims**

1. Modular surgical training system for training for surgical interventions, comprising

   - a reusable, energy-supplying base module (1),
   - a regenerable training module (2) which imitates or has anatomical structures (3) and can receive at least one consumable medium (4) simulating body fluids, wherein
   - pneumatic and, optionally, mechanical and/or electrical energy are transferable from the base module (1) to the training module (2), and, optionally, electric signals are transferable between the base module (1) and training module (2), and
   - at least one conveying means (6) which conveys the consumable medium (4) into the anatomical structures (3) and is arranged in the base module (1) and in the training module (2),

   **characterized in that** the training module (2) and the base module (1) are releasably connected to each other via a combination interface (5) realizing the transmission of the pneumatic and, optionally, mechanical and/or electrical energy from the base module (1) to the training module (2) and, optionally, of the electric signals between the base module (1) and training module (2), and the conveying means of the base module are connected to the conveying means of the training module via the combination interface (5),

in that the conveying means (6) in the base station (1) have at least one air compressor (61) producing pneumatic energy in the form of compressed air, wherein the conveying means (6) in the training module (2) have at least one pressure volume (62) receiving the compressed air, and at least one consumable media volume (63) which is separated in terms of media from the pressure volume (62) and receives a consumable medium (4), wherein pressure volume (62) and consumable media volume (63) interact with each other such that at least one consumable medium (4) is conveyable into the anatomical structures (3) and/or a pressure can be produced in the anatomical structure.

2. Modular surgical training system according to Claim 1, **characterized in that** at least two consumable media (4) can be received by the training module (2), wherein the first consumable medium (4) is conductible through at least one outlet point (31) of the anatomical structures (3), and that the internal pressure of the at least one section of the anatomical structures (3) can be imitated by means of the second consumable medium (4).

3. Modular surgical training system according to either of the preceding claims, **characterized in that** the base module (1) and the training module (2) have control means (7) which are releasably connected via the combination interface (5) and can control at least one volumetric flow (43).

4. Modular surgical training system according to Claim 3, **characterized in that** at least one volumetric flow (43) of the at least one consumable medium (4) is controllable by the control means (7).

5. Modular surgical training system according to Claim 3, **characterized in that** the control means (7) in the base module (1) have at least one tube constriction valve actuator (71).

6. Modular surgical training system according to Claim 3, **characterized in that** the control means (7) in the training module (2) have at least self-locking and/or self-opening tube constriction valve (72).

7. Modular surgical training system according to one of the preceding claims, **characterized in that** the base module (1) has a sensor module (81) measuring at least one physical variable.

8. Modular surgical training system according to Claim 7, **characterized in that** sensor module (81) and training module (2) have measurement means (8) which are releasably connected via the combination interface (5).

9. Modular surgical training system according to Claim 8, **characterized in that** the measurement means (8) in the training module (2) have at least one ultrasonic transmitter (83) and at least one corresponding ultrasonic receiver (84).

10. Modular surgical training system according to Claim 9, **characterized in that** the measurement means (8) in the training module (2) have at least one air-filled connecting means (82).

11. Modular surgical training system according to Claim 10, **characterized in that** the first end of the connecting means (82) is connected to the ultrasonic transmitter (83) and the second end of the connecting means (82) is connected to the ultrasonic receiver (84).

12. Modular surgical training system according to Claim 10, **characterized in that** the connecting means (82) is arranged on or in the anatomical structures (3), wherein the anatomical structures (3) and the connecting means (82) interact with one another and a deformation of the anatomical structure (3) is measurable by traction and/or compression of the connecting means (82).

13. Modular surgical training system according to one of the preceding claims, **characterized in that** the base module (1) has a controller module (9) which processes electrical signals and is connectable to a user interface (10) for operating the training system.

**Revendications**

1. Système de formation chirurgical modulaire destiné à la formation aux interventions chirurgicales, comprenant

   - un module de base (1) d'alimentation en énergie réutilisable,
   - un module de formation (2) régénérable, simulant ou possédant des structures anatomiques (3) et pouvant accueillir au moins un fluide consommable (4) simulant des liquides corporels,
   - de l'énergie pneumatique et, en option, mécanique et/ou électrique pouvant être transmise du module de base (1) au module de formation (2) et, en option, des signaux électriques pouvant être transmis entre le module de base (1) et le module de formation (2), et

- au moins un moyen de transport (6) disposé dans le module de base (1) et dans le module de formation (2) qui transporte le fluide consommable (4) dans les structures anatomiques (3),

**caractérisé en ce que** le module de formation (2) et le module de base (1) sont reliés ensemble de manière amovible par le biais d'une interface combinée (5), laquelle réalise la transmission de l'énergie pneumatique et, en option, mécanique et/ou électrique transmise du module de base (1) au module de formation (2) et, en option, des signaux électriques entre le module de base (1) et le module de formation (2), et le moyen de transport du module de base est relié aux moyens de transport du module de formation par le biais de l'interface combinée (5), **en ce que** les moyens de transport (6) dans la station de base (1) possèdent au moins un compresseur d'air (61) qui génère une énergie pneumatique sous la forme d'air comprimé, les moyens de transport (6) dans le module de formation (2) possédant au moins un volume de pression (62) qui accueille l'air comprimé et au moins un volume à fluide consommable (63), séparé du volume de pression (62) côté fluide et accueillant un fluide consommable (4), le volume de pression (62) et le volume à fluide consommable (63) interagissant l'un avec l'autre de telle sorte qu'au moins un fluide consommable (4) peut être transporté dans les structures anatomiques (3) et/ou une pression peut être générée dans la structure anatomique.

2. Système de formation chirurgical modulaire selon la revendication 1, **caractérisé en ce qu'**au moins deux fluides consommables (4) peuvent être accueillis par le module de formation (2), le premier fluide consommable (4) pouvant être acheminé à travers au moins un point de sortie (31) des structures anatomiques (3) et qu'au moyen du deuxième fluide consommable (4) la pression interne d'au moins une portion des structures anatomiques (3) pouvant être simulée.

3. Système de formation chirurgical modulaire selon l'une des revendications précédentes, **caractérisé en ce que** le module de base (1) et le module de formation (2) possèdent des moyens de commande (7) reliés de manière amovible par le biais de l'interface combinée (5) et qui peuvent commander au moins un débit volumique (43).

4. Système de formation chirurgical modulaire selon la revendication 3, **caractérisé en ce qu'**au moins un débit volumique (43) de l'au moins un fluide consommable (4) peut être commandé par les moyens de commande (7).

5. Système de formation chirurgical modulaire selon la revendication 3, **caractérisé en ce que** les moyens de commande (7) dans le module de base (1) possèdent au moins un actionneur de valve péristaltique (71).

6. Système de formation chirurgical modulaire selon la revendication 3, **caractérisé en ce que** les moyens de commande (7) dans le module de formation (2) possèdent au moins une valve péristaltique (72) à fermeture automatique et/ou à ouverture automatique.

7. Système de formation chirurgical modulaire selon l'une des revendications précédentes, **caractérisé en ce que** le module de base (1) possède un module de détection (81) qui mesure au moins une grandeur physique.

8. Système de formation chirurgical modulaire selon la revendication 7, **caractérisé en ce que** le module de détection (81) et le module de formation (2) possèdent des moyens de mesure (8) reliés de manière amovible par le biais de l'interface combinée (5).

9. Système de formation chirurgical modulaire selon la revendication 8, **caractérisé en ce que** les moyens de mesure (8) dans le module de formation (2) possèdent au moins un émetteur d'ultrasons (83) et au moins un récepteur d'ultrasons (84) correspondant.

10. Système de formation chirurgical modulaire selon la revendication 9, **caractérisé en ce que** les moyens de mesure (8) dans le module de formation (2) possèdent au moins un moyen de liaison (82) rempli d'air.

11. Système de formation chirurgical modulaire selon la revendication 10, **caractérisé en ce que** la première extrémité du moyen de liaison (82) est reliée à l'émetteur d'ultrasons (83) et la deuxième extrémité du moyen de liaison (82) est reliée au récepteur d'ultrasons (84).

12. Système de formation chirurgical modulaire selon la revendication 10, **caractérisé en ce que** le moyen de liaison (82) est disposé sur ou dans les structures anatomiques (3), les structures anatomiques (3) et le moyen de liaison (82) interagissant mutuellement et une déformation de la structure anatomique (3) par une traction et/ou une compression du moyen de liaison (82) étant mesurable.

13. Système de formation chirurgical modulaire selon l'une des revendications précédentes, **caractérisé en ce que** le module de base (1) possède un module contrôleur (9) qui traite des signaux électriques, lequel peut être relié à une interface d'utilisateur (10) pour l'utilisation du système de formation.

## Fig. 1

## Fig. 2

# Fig. 3

# Fig. 4

Fig. 5

Fig. 6

Fig. 7a

Fig. 7b

## Fig. 8

83, 84, 85

86

83, 84, 85

86

83, 84, 85

86

83, 84, 85

86

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9406109 A1
- WO 96742076 A1
- WO 0241285 A2
- US 20090246747 A1
- WO 2009067778 A1
- DE 202008009567 U1

**In der Beschreibung aufgeführte Nicht-Patentliteratur**

- **G. BAUSCH et al.** Design and development process of a next-generation training system for spinal surgery. *Simulation,* 29. Oktober 2013, vol. 89 (12), ISBN 0037-54, 1436-1441
- **TOBIAS PILIC et al.** Ultrasonic Sensory for Monitoring Mechanical Structures in Surgical Training Systems. *Biomedical Engineering / Biometrische Technik,* 07. September 2013, ISBN 0013-5585